(19) Europäisches Patentamt
European Patent Office
Office européen des brevets

(11) **EP 2 577 162 B1**

(12) **FASCICULE DE BREVET EUROPEEN**

(45) Date de publication et mention
de la délivrance du brevet:
**10.07.2019 Bulletin 2019/28**

(21) Numéro de dépôt: **11728309.3**

(22) Date de dépôt: **24.05.2011**

(51) Int Cl.:
*F23C 10/00* *(2006.01)*    *F23C 10/10* *(2006.01)*
*F23C 6/04* *(2006.01)*    *B01J 8/26* *(2006.01)*
*B01J 8/38* *(2006.01)*    *B01J 8/00* *(2006.01)*
*C10J 3/56* *(2006.01)*    *C10J 3/72* *(2006.01)*

(86) Numéro de dépôt international:
**PCT/FR2011/000308**

(87) Numéro de publication internationale:
**WO 2011/151535 (08.12.2011 Gazette 2011/49)**

(54) **PROCÉDÉ DE COMBUSTION EN BOUCLE CHIMIQUE AVEC DEUX ZONES DE RÉACTION SUCCESSIVES ET UNE ZONE DE SÉPARATION ET INSTALLATION UTILISANT UN TEL PROCÉDÉ**

CHEMICAL-LOOPING-COMBUSTION VERFAHREN MIT ZWEI SUKZESSIVEN REAKTIONSBEREICHEN UND EINEM ABSCHEIDUNGSBEREICH UND EINRICHTUNG MIT DIESEM VERFAHREN

CHEMICAL LOOPING COMBUSTION PROCESS WITH TWO SUCCESSIVES REACTION ZONES AND A SEPARATION ZONE AND PLANT USING SUCH A PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2010 FR 1002325**

(43) Date de publication de la demande:
**10.04.2013 Bulletin 2013/15**

(73) Titulaires:
• **IFP Energies nouvelles**
**92500 Rueil-Malmaison (FR)**
• **TOTAL RAFFINAGE CHIMIE**
**92400 Courbevoie (FR)**

(72) Inventeurs:
• **GAUTHIER, Thierry**
**69530 Brignais (FR)**

• **HOTEIT, Ali**
**75012 Paris (FR)**
• **GUILLOU, Florent**
**69360 Ternay (FR)**
• **STAINTON, Hélène**
**69002 Lyon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 2 107 302    EP-A2- 0 211 483
FR-A1- 2 556 983    FR-A1- 2 850 156
FR-A1- 2 936 301    JP-A- 61 186 705
US-A- 4 248 164    US-A1- 2005 175 533

**Description**

**Domaine de l'invention**

Le domaine de l'invention est celui de la combustion en boucle chimique (CLC) pour produire de l'énergie, du gaz de synthèse et/ou de l'hydrogène.

**Art antérieur**

Un procédé combustion en boucle chimique comprend généralement une ou plusieurs zones réactionnelles dans lesquelles on effectue la combustion d'un combustible par mise en contact avec un solide porteur d'oxygène qui est ensuite réoxydé dans au moins une zone d'oxydation par mise en contact avec de l'air ou de la vapeur d'eau avant d'être renvoyé vers la ou les zone(s) de combustion (ou réduction).

La combustion en boucle chimique consiste donc à mettre en contact dans une enceinte à haute température une charge hydrocarbonée gazeuse, liquide et/ou solide avec un solide de type oxyde métallique porteur d'oxygène. L'oxyde métallique cède une partie de l'oxygène qu'il renferme, celui-ci participant à la combustion des hydrocarbures.

A l'issue de la combustion, les fumées contiennent majoritairement des oxydes de carbone, de l'eau et éventuellement de l'hydrogène. En effet, il n'est pas nécessaire de mettre en contact la charge hydrocarbonée avec de l'air et les fumées sont donc majoritairement composées des gaz de combustion et éventuellement d'un gaz de dilution servant au transport et à la fluidisation des particules (par exemple de la vapeur d'eau).

Ainsi, il est possible de produire des fumées exemptes majoritairement d'azote et contenant des teneurs en $CO_2$ élevées (> 90% vol.) permettant d'envisager le captage, puis le stockage de ce $CO_2$. L'oxyde métallique ayant participé à la combustion est ensuite transporté vers une autre enceinte réactionnelle où il est mis en contact avec de l'air pour être réoxydé.

La mise en oeuvre d'un procédé de combustion en boucle chimique requiert des quantités d'oxydes métalliques importantes pour brûler la totalité du combustible. Ces oxydes métalliques sont généralement contenus, soit dans des particules de minerai, soit dans des particules résultant de traitement industriels (résidus de l'industrie sidérurgique ou minière, catalyseurs usagés de l'industrie chimique ou du raffinage). Des matériaux synthétiques peuvent également être utilisés, tels que par exemple des supports d'alumine ou de silice-alumine, sur lesquels des métaux pouvant être oxydés auront été déposés (oxyde de nickel par exemple).

La capacité maximale d'oxygène réellement disponible varie considérablement d'un oxyde à l'autre, et est généralement comprise entre 0,1 et 15%, et souvent entre 0,3 et 6% poids. La mise en oeuvre en lit fluidisé est de ce fait particulièrement avantageuse pour conduire la combustion. En effet, les particules d'oxydes finement divisées circulent plus facilement dans les enceintes réactionnelles de combustion et d'oxydation, ainsi qu'entre ces enceintes, si l'on confère aux particules les propriétés d'un fluide.

La demande de brevet FR 2 850 156 décrit un procédé de combustion en boucle chimique pour lequel le combustible est broyé avant l'entrée dans le réacteur de réduction fonctionnant en lit fluidisé circulant. La taille réduite des particules de combustible solide permet une combustion plus complète et plus rapide et permet de produire presque 100% de cendres volantes qui sont séparées des oxydes en circulation. La séparation en aval du lit circulant est d'abord assurée par un cyclone puis par un dispositif permettant de séparer les particules d'imbrûlés des particules d'oxyde métallique. L'entraînement d'imbrûlés dans la zone d'oxydation et donc les émissions de $CO_2$ dans les effluents du réacteur d'oxydation est donc ainsi évité.

Le dispositif de séparation comprend un lit fluidisé par de la vapeur d'eau, qui permet de séparer les particules fines et légères telles que le résidu carboné et de réintroduire ce dernier dans le réacteur, tandis que les particules plus denses et plus grosses d'oxydes sont transférées vers le réacteur d'oxydation. Ce dispositif est un équipement relativement sophistiqué puisqu'il contient deux compartiments internes.

De plus, selon FR 2 850 156, les cendres volantes sont séparées des particules d'oxydes dans un second circuit où un séparateur fonctionnant en lit fluidisé opère la séparation, les cendres volantes fluidisées étant envoyées vers un silo via un transport pneumatique et les oxydes métalliques étant extraits à la base du réacteur à lit fluidisé après décantation.

En outre, les vitesses de gaz importantes mises en oeuvre dans le réacteur de réduction opérant en lit fluidisé circulant ne permettent pas d'obtenir des temps de séjour des particules suffisants pour gazéifier la totalité du combustible solide puis pour opérer la combustion des produits de gazéification. Un recyclage important des particules d'imbrûlés, par passage par le séparateur, est donc nécessaire. Or, la séparation des imbrûlés des particules d'oxydes est délicate car elle nécessite l'apport de gaz additionnel en grande quantité, ce qui est coûteux en énergie.

De plus, du fait du temps de séjour trop court, il est difficile de réaliser une combustion totale et les fumées contiennent des quantités importantes de CO et de $H_2$, ce qui implique la présence d'une zone de postcombustion en aval du procédé.

Le document FR 2 936 301 A1 divulgue quant à lui un dispositif et un procédé de combustion en boucle chimique d'au moins une charge hydrocarbonée liquide.

Dans la thèse de N. Berguerand "Design and Opération of a 10 kWth Chemical-Looping Combustor for Solid Fuels", ISBN 978-91-7385-329-3, est décrit un dispositif qui permet d'effectuer la combustion de charbon en mettant en oeuvre une boucle chimique.

Ce dispositif est composé d'un réacteur d'oxydation mettant en oeuvre des particules métalliques, d'un cyclone permettant la séparation des particules et de l'air appauvri après oxydation, d'un lit fluidisé alimenté en oxydes métalliques oxydés par la jambe de retour située sous le cyclone, dans lequel s'effectue la réduction de l'oxyde métallique par combustion du charbon. Le charbon est alimenté dans la partie supérieure du lit fluidisé, dans la phase diluée. Dans le réacteur de réduction, la combustion du charbon s'effectue progressivement : les particules de charbon commencent par descendre et se dévolatilisent dans la phase diluée, à contre-courant des gaz de fluidisation, et dans laquelle les oxydes métalliques ne sont présents qu'en faible quantité; puis elles rentrent en contact avec les oxydes métalliques fluidisés en phase dense. Le temps de séjour important permet de gazéifier le charbon et de produire des gaz de combustion contenant des quantités importantes de monoxyde de carbone et d'hydrogène qui passent dans la phase diluée. Dans la phase dense du réacteur, les vitesses de fluidisation sont faibles - généralement comprises entre 5 et 30 cm/s - ce qui ne permet pas l'entraînement de quantités significatives d'oxydes métalliques dans la phase diluée qui pourraient favoriser la combustion de gaz tels que CO, $H_2$ ou les hydrocarbures volatilisés qui sont évacués de la zone diluée. De ce fait, les quantités de CO et d'hydrocarbures (HC) dans les effluents du réacteur de réduction sont importantes et supérieures à plusieurs pourcents en volume. Le rendement de combustion n'est donc pas très bon et une zone de postcombustion est également nécessaire pour finir la combustion.

De plus, selon ce document, le réacteur de réduction est équipé d'un séparateur de particules intégré à la phase dense ce qui nécessite l'ajout de gaz additionnel pour réaliser la séparation.

Les demandeurs ont mis au point un procédé de combustion en boucle chimique amélioré, qui permet, même à partir de particules de combustible à l'état grossier, d'obtenir une combustion totale de la charge solide en minimisant la quantité de charge solide à recycler, ce qui permet de maximiser le rendement énergétique du procédé.

Le procédé de combustion selon l'invention permet de capter au moins 90% du $CO_2$ émis par la combustion dans les fumées directement à la sortie du réacteur de combustion, le taux de captage étant défini par le ratio:

$$\frac{\text{Quantité de } CO_2 \text{ émis dans les fumées issues du réacteur de combustion}}{\text{Quantité de } CO_2 \text{ émis dans le procédé de combustion en boucle chimique}}$$

En sortie du procédé de combustion selon l'invention, le ratio molaire $CO/CO_2$ des fumées en aval des cyclones est inférieur à 0,05 et le ratio $H_2/H_2O$ est inférieur à 0,05.

Dans le procédé de combustion en boucle chimique selon l'invention, d'une part, le contact entre les particules transportant l'oxygène et le combustible solide est optimisé pour favoriser les réactions de gazéification du charbon, et d'autre part, le contact entre les produits de gazéification et les oxydes métalliques est également optimisé afin de produire des effluents ayant subi une combustion totale ($H_2$, CO et HC < 1% vol. dans les fumées).

Par ailleurs, selon le procédé de l'invention, la séparation des particules d'imbrûlés des particules d'oxydes métalliques est effectuée en amont de l'étape de dépoussiérage des fumées du réacteur de réduction pour utiliser au mieux l'énergie cinétique maximale des fumées pour la séparation des deux types de particules.

A cet effet, la présente invention concerne un procédé de combustion d'une charge solide en boucle chimique dans laquelle circule un matériau porteur d'oxygène, selon la revendication 1.

L'admission du mélange de particules à séparer dans la zone de séparation peut être réalisée dans une phase diluée du lit fluidisé que comprend cette zone.

La charge solide peut être choisie parmi le charbon, le coke, le pet-coke, la biomasse, les sables bitumineux et les déchets ménagers.

Le temps de séjour moyen de la phase solide dans la première zone de réaction peut être compris entre 0,25 et 20 minutes et la vitesse superficielle du gaz comprise entre 0,3 et 3 m/s.

Le temps moyen de séjour du gaz dans la seconde zone peut être compris entre 1 et 20 secondes et le temps moyen de séjour des solides entre 2 secondes et 1 minute, et dans lequel le taux de vide dans la zone est supérieur à 0,9.

Dans la zone de séparation, un écoulement gazeux de vitesse imposée peut être induit à au moins 80% par l'effluent gazeux contenant les particules provenant de la seconde zone.

Dans la zone de séparation, la vitesse superficielle du gaz dans la phase diluée de la zone de séparation peut être fixée à une valeur comprise entre 30 et 300% de la vitesse terminale de chute moyenne des particules de porteur d'oxygène.

Dans la zone de séparation, la vitesse superficielle du gaz dans la phase diluée de la zone de séparation peut être fixée à une valeur comprise entre 50 et 150% de la vitesse terminale de chute moyenne des particules de porteur d'oxygène.

A la sortie de la zone de séparation, le flux gazeux contenant les particules légères et une fraction de particules de porteurs d'oxygène est envoyé vers au moins un étage de séparation gaz-solide pour récupérer la quasi totalité des particules contenues dans le flux gazeux provenant de la zone de séparation et qui sont ensuite recyclées vers la zone de réaction.

On peut admettre un mélange de particules et de gaz dans l'enceinte du séparateur, on peut extraire les particules par une sortie en partie haute de l'enceinte et une évacuation en partie basse de cette enceinte, les paramètres d'admission et d'extraction étant choisis pour créer dans l'enceinte une phase dense inférieure et une phase diluée supérieure, phase diluée dans laquelle est admise ledit mélange.

L'enceinte du séparateur peut être alimentée par un gaz provenant d'une source externe. L'invention concerne également une installation pour réaliser la combustion d'une charge solide, selon la revendication 11.

La seconde zone de réaction peut comprendre une alimentation de solide porteur d'oxygène frais.

La seconde zone de réaction peut comprendre une alimentation en oxygène.

La zone de séparation peut comprendre une enceinte avec au moins une conduite d'admission dudit mélange, une conduite d'évacuation située en partie inférieure de l'enceinte et une conduite de sortie située en partie supérieure du dispositif, les paramètres d'admission et d'évacuation/sortie étant choisis pour créer dans l'enceinte une phase dense en partie inférieure et une phase diluée en partie supérieure, et dans lequel ladite conduite d'admission débouche dans la phase diluée.

L'enceinte du séparateur peut comprendre en outre une conduite d'alimentation pour un gaz provenant d'une source externe.

La section de passage de la seconde zone de réaction peut être inférieure à la section de passage de la zone de réaction.

Au moins un étage de séparation gaz-solide peut être prévu pour récupérer les particules contenues dans le flux gazeux issus de la zone de séparation et les recycler par une conduite vers la première zone de réaction.

L'installation peut comprendre deux étages de séparation gaz-solide dans laquelle un des étages de séparation est alimenté par un flux gazeux contenant des particules provenant de l'autre des étages de séparation.

Au moins une enceinte contenant un lit fluidisé pour séparer les particules légères restant parmi les particules d'imbrûlés peut être présente sur les conduites.

## Description détaillée

L'invention est illustrée à partir des figures 1 à 4 qui ne présentent pas de caractère limitatif.

- La figure 1 décrit le principe général de l'invention,
- La figure 2 décrit une mise en oeuvre particulière des zones de réactions (R1), (R2) et de la zone de séparation (S3),
- La figure 3 représente une configuration possible de la liaison entre la deuxième zone de réaction (R2) et la zone de séparation (S3),
- La figure 4 représente une autre configuration possible entre la zone de réaction (R2) et la zone de séparation (S3).

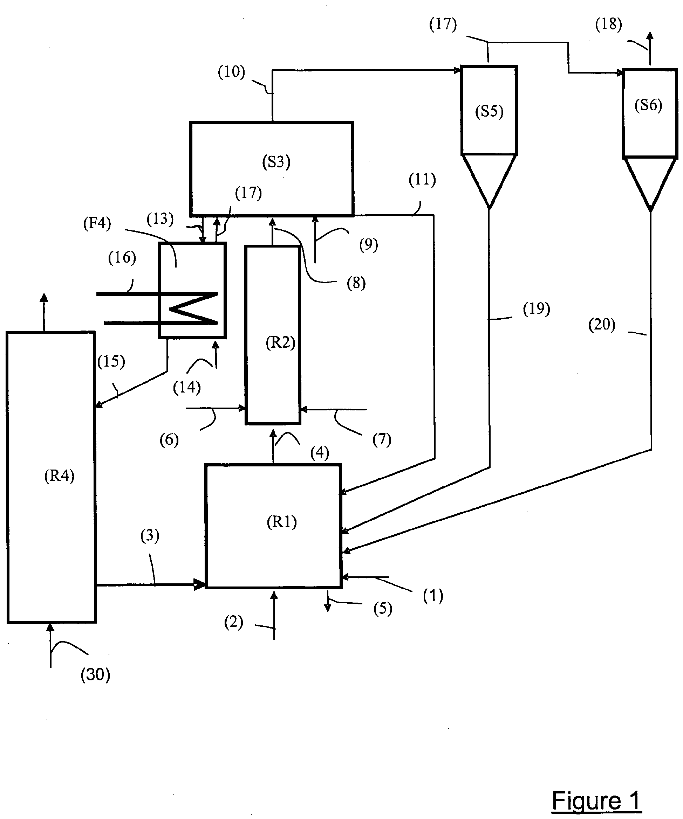

Sur la figure 1, la zone de réaction ou réacteur (R1) est alimentée en combustible, ici un combustible solide, par une conduite (1). Le combustible solide peut être introduit à travers un conduit qui est pénétrant à l'intérieur du réacteur. L'écoulement des particules de combustible solide est soit continu, soit intermittent avec une fréquence d'injection correspondant à une période égale à au moins la moitié du temps de séjour moyen de l'ensemble des particules de combustible solide dans la zone de réaction (R1).

Le combustible solide est injecté dans la zone de réaction (R1), dans laquelle il subit une dévolatilisation des composés volatils, qui représentent généralement de 5 à 50% en poids du combustible solide selon son origine, au contact des particules de porteur d'oxygène provenant d'une zone d'oxydation (R4) et amenées par une conduite (3).

La zone de réaction (R1) est également alimentée par un gaz de fluidisation amené par une conduite (2). Les moyens de fluidisation (non représentés) sont bien connus de l'Homme du métier et sont par exemple, des grilles de distribution plates ou tronconiques, des couronnes de distribution ou des "spargers". Afin de favoriser les réactions de gazéification, le gaz de fluidisation injecté est de préférence de la vapeur d'eau, ou éventuellement un mélange vapeur d'eau et de $CO_2$. La température dans la zone de réaction (R1) est sensiblement homogène compte tenu des conditions de fluidisation conduisant à la formation d'une phase dense. La température est préférentiellement supérieure à 800°C et préférentiellement comprise entre 900 et 1000°C, de façon à minimiser la durée requise pour gazéifier le combustible solide.

De la zone de réaction (R1) sortent, par un conduit (4), les particules d'oxydes métalliques et une fraction de combustible solide imbrûlé accompagnées des gaz de combustion contenant de la vapeur d'eau, de l'azote, de l'hydrogène, du CO et/ou du $CO_2$ ou un mélange de ces gaz. Le conduit (4) assure le transfert du mélange gazeux contenant les particules vers une deuxième zone de réaction (R2). Le conduit (4) est préférentiellement un conduit de section variable de façon à faire la jonction entre les zones de réactions (R1) et (R2).

Un conduit (5) permet également d'extraire, dans la partie inférieure de la zone de réaction (R1) les cendres formées et agglomérées entre elles dans le réacteur ainsi qu'éventuellement des particules de transporteur d'oxygène et des particules d'imbrûlés.

La deuxième zone de réaction (R2) assure la combustion du mélange gazeux issu de la zone de réaction (R1). Afin de favoriser la combustion totale, il peut être envisagé d'introduire une certaine quantité de solide porteur d'oxygène frais totalement oxydé par une conduite (6). Il est également possible d'injecter de l'oxygène directement par une conduite (7).

A la sortie de la deuxième zone de réaction (R2), l'effluent gazeux contenant des particules est extrait par une conduite (8) pour être envoyé vers une zone de séparation (S3) dans laquelle s'opère une séparation rapide entre les particules les plus légères - majoritairement des particules d'imbrûlés et éventuellement des cendres volantes et des fines d'oxydes métalliques - extraites par un conduit (10) avec le gaz, et les particules les plus lourdes - majoritairement des particules d'oxydes métalliques - extraites dans la partie inférieure de la zone de séparation (S3) par un conduit (13) alimentant une enceinte (F4) faisant office de zone tampon. La zone tampon (F4) peut être matérialisée par un lit fluidisé concentrique et périphérique à la deuxième zone de réaction (2), la fluidisation étant obtenue par injection d'un gaz amené par une conduite (14). De manière avantageuse, ce dernier participe à la séparation dans la zone de séparation (S3) en étant canalisé vers celle-ci par une conduite (17). Dans ce lit fluidisé de la zone tampon, il est avantageux de disposer de moyens d'échange de chaleur (16) qui peuvent être des tubes en paroi ou dans le lit fluidisé permettant de récupérer une part variable représentant généralement de 5 à 60% de la chaleur produite dans le procédé de combustion en boucle chimique. Un conduit (15) permet de soutirer les particules de porteur d'oxygène de la zone tampon vers une zone d'oxydation (R4) pour réoxyder celles-ci.

Dans la zone de séparation (S3), il est également possible d'introduire par un conduit (9) un gaz provenant d'une source extérieure. Ce gaz peut contenir de l'oxygène ou un gaz oxydant pour poursuivre les réactions de combustion du CO et de l'hydrogène dans le séparateur (S3).

De la zone de séparation (S3), une partie des particules lourdes ayant décanté (majoritairement des particules de porteur d'oxygène) est extraite par une conduite (11) pour être recyclée vers la zone de réaction (R1). Il est ainsi possible éventuellement de favoriser l'homogénéité de température dans les zones de réaction (R1), (R2) et dans la zone de séparation (S3).

A la sortie de la zone de séparation (S3), une conduite (10) véhicule le flux gazeux contenant les particules les plus légères - majoritairement des particules d'imbrûlés et éventuellement des cendres volantes - et une fraction minoritaire de particules de porteurs d'oxygène vers au moins un étage de séparation gaz-solide, ici deux étages de séparation gaz-solide (S5, S6), des cyclones par exemple, qui permettent de récupérer la quasi totalité des particules contenues dans le flux gazeux de la conduite (10) et qui sont ensuite recyclées vers la zone de réaction (R1) respectivement par les conduites (19) et (20), après élimination éventuelle des cendres volantes par élutriation en lit fluidisé par exemple.

En sortie du premier cyclone (S5), le flux gazeux est extrait par une conduite (17) pour être envoyé vers le deuxième cyclone (S6) et en sortie de ce cyclone (S6) le gaz pratiquement exempt de particules est extrait par une conduite (18), celui-ci ne contenant plus qu'une teneur en particules généralement comprise entre 100 mg/m$^3$ et 1 g/m$^3$.

Par cela, le procédé de combustion d'une charge solide en boucle chimique dans laquelle circule un matériau porteur d'oxygène, comprend au moins une première zone de réaction (R1) opérant en lit fluidisé dense et permettant de gazéifier les particules de charge solide en présence de particules d'oxydes métalliques; une deuxième zone de réaction de combustion ou réduction (R2) opérant en lit fluidisé dilué et permettant d'effectuer la combustion des effluents gazeux issus de la première zone de réaction (R1) en présence de particules d'oxydes métalliques; une zone de séparation (S3) opérant une séparation au sein d'un mélange contenant du gaz, des particules d'imbrûlés, des particules d'oxydes métalliques, ledit mélange étant issu de la deuxième zone de réaction (R2), et ladite zone de séparation comportant une enceinte au sein de laquelle l'admission du mélange de particules à séparer est réalisée dans une phase diluée dans laquelle s'écoule un gaz à une vitesse ascendante qui est imposée; une zone d'oxydation (R4) des particules d'oxydes métalliques permettant de réoxyder lesdites particules avant de les renvoyer vers la zone de réaction (R1).

Par lit fluidisé dense, on entend un lit fluidisé dans lequel la fraction de gaz $\varepsilon_g$ est inférieure à 0,9, de préférence inférieure à 0,8.

Par lit fluidisé dilué, on entend un lit fluidisé dans lequel la fraction volumique des particules d'oxydes métalliques est inférieure à 10% en volume.

Avantageusement, la zone de réaction (R1) est alimentée en:

• charge solide, sèche ou partiellement humide, se présentant sous forme de particules sèches ou partiellement humides, de granulométrie généralement comprise entre 100 microns et 10 mm, de préférence comprise entre 100 et 500 microns.

La charge ou combustible solide est généralement choisie parmi le charbon, le coke, le pet-coke, la biomasse, les sables bitumineux et les déchets ménagers.et préférentiellement, la charge traitée est le charbon.

- particules de porteur d'oxygène provenant directement de la zone d'oxydation (R4),
- particules de porteur d'oxygène provenant d'un ou de plusieurs cyclones séparateurs gaz-particules (S5, S6) situés en aval de la deuxième zone de réaction (R2).
- gaz de fluidisation, qui est généralement de l'azote, de la vapeur d'eau et/ou du $CO_2$ recyclé, et de préférence de la vapeur d'eau. Dans le cas de la vapeur d'eau ou du $CO_2$, le gaz peut participer activement à la gazéification du combustible solide.

Dans la zone de réaction (R1), le temps de séjour moyen de la phase solide (combustible solide et porteur d'oxygène) est compris entre 0,25 et 20 minutes, de préférence entre 2 et 10 minutes. La vitesse superficielle du gaz est généralement comprise entre 0,3 et 3 m/s (aux conditions de réaction en sortie de la zone de réaction (R1)).

La concentration en oxydes métalliques dans la zone de réaction (R1) est au moins égale à 10% en volume.

La température est généralement comprise entre 800 et 1000°C, de préférence supérieure à 900°C.

La mise en oeuvre d'un procédé de combustion en boucle chimique selon le procédé de l'invention requiert des quantités d'oxydes métalliques importantes. Ces oxydes métalliques sont généralement contenus, soit dans des particules de minerai, soit dans des particules résultant de traitements industriels (résidus de l'industrie sidérurgique ou minière, catalyseurs usagés de l'industrie chimique ou du raffinage. Ils peuvent également résulter de matériaux synthétiques, tels que par exemple des supports d'alumine ou de silice-alumine sur lesquels des métaux pouvant être oxydés auront été déposés (oxyde de nickel par exemple). La capacité d'oxygène réellement disponible varie considérablement d'un oxyde à l'autre, et est généralement comprise entre 0,1 et 15%, et souvent entre 0,3 et 3% poids. La mise en oeuvre en lit fluidisé est de ce fait particulièrement avantageuse pour conduire la combustion. En effet, les particules d'oxydes finement divisées circulent plus facilement dans les enceintes de réactions de combustion et d'oxydation, ainsi qu'entre ces enceintes, si l'on confère aux particules les propriétés d'un fluide.

Les particules de porteur d'oxygène ont en général une taille et une masse volumique bien plus importante que celles des cendres volantes et des particules d'imbrûlés ayant été au contact des particules transportant l'oxygène dans la zone de combustion à haute température. En sortie de la zone de combustion, on estime que la taille des particules imbrûlées de charbon est inférieure à 100 microns et que la majorité des particules a une taille inférieure à 150 microns. La masse volumique de ces particules est en général comprise entre 1000 et 1500 kg/m$^3$.

D'autres particules comme les cendres volantes résultant de la combustion de la charge solide peuvent également circuler avec le reste des particules et sont caractérisées par une taille de particules et une masse volumique plus faibles que les particules de porteur d'oxygène et souvent plus faibles également que les particules d'imbrûlés.

Dans la deuxième zone de réaction (R2) s'écoulent les effluents gazeux et solides issus de la zone de réaction (R1), à l'exception d'une très faible fraction de particules de cendres agglomérées qui peuvent être soutirées en fond de la zone de réaction (R1).

La section de passage de la deuxième zone de réaction (R2) est strictement inférieure à la section de passage de la zone de réaction (R1). De manière préférée, la section de passage de la deuxième zone de réaction (R2) est inférieure d'au moins 25 % à celle de la zone de réaction (R1) et de manière préférée d'au moins 50 %.

De cette façon, le changement de section permet d'augmenter la vitesse entre les zones de réactions (R1) et (R2) et d'assurer la transition entre l'écoulement en phase dense et en phase diluée.

Dans la deuxième zone de réaction (R2) est opérée la combustion de l'effluent gazeux. Compte tenu des vitesses du gaz, le temps moyen de séjour du gaz dans cette zone est généralement compris entre 1 et 20 secondes, le temps moyen de séjour des solides variant entre 2 secondes et 1 minute.

Dans ces conditions, et compte tenu de la nature diluée de l'écoulement et de la présence de porteur d'oxygène, les réactions sont essentiellement des réactions entre la phase gazeuse et le solide. Ces réactions sont typiquement la conversion de CO et $H_2$ en $CO_2$ et $H_2O$.

Afin de favoriser la combustion totale des hydrocarbures sortant de cette zone, il peut être avantageux d'injecter de l'oxygène dans cette zone, soit sous forme de particules de porteur d'oxygène frais provenant d'une zone d'oxydation, soit sous forme d'oxygène gazeux.

Par ailleurs, il peut également être avantageux d'injecter une partie du combustible solide dans cette deuxième zone de réaction, notamment si le combustible présente une quantité de matières volatiles élevée. De cette manière, la charge gazeuse dans la zone de réaction (R1) est limitée et par voie de conséquence, le diamètre du réacteur est plus faible.

Certains combustibles solides sont en effet connus pour présenter des teneurs en matières volatiles élevées, par exemple comprises entre 25 et 50%.

Dans cette deuxième zone de réaction, les matières volatiles solides sont dévolatilisées et peuvent brûler rapidement. En revanche, le résidu du combustible solide non volatilisé ("char"), n'a pas le temps de réagir compte tenu du temps de séjour trop court - et de surcroît du temps de contact trop court avec le transporteur d'oxygène - dans cette zone de réaction. Il sera recyclé dans la zone de réaction (R1), après sa séparation dans la zone de séparation (S3) située en aval, de l'effluent gazeux issu de la deuxième zone de réaction (R2).

La deuxième zone de réaction (R2) opère en lit fluidisé dilué dans lequel l'ensemble des solides sont transportés. Le temps de séjour de la phase gazeuse est généralement compris entre 1 et 20 secondes, le flux de solide transporté compris entre 25 et 500 kg/s/m$^2$, préférentiellement compris entre 60 et 300 kg/s/m$^2$.

La vitesse superficielle du gaz est supérieure à 3 m/s et inférieure à 30 m/s, de préférence comprise entre 5 et 15 m/s (exprimée aux conditions), de façon à faciliter le transport de l'ensemble des particules tout en minimisant les pertes de charge de façon à optimiser le rendement énergétique du procédé.

Dans cette zone, l'écoulement est dilué et l'essentiel du volume est occupé par le gaz. Ainsi, le taux de vide est généralement supérieur à 90%, voire à 95%.

Les particules transportées avec le gaz sont de différentes natures. On distingue:

- les particules de porteur d'oxygène ayant cédé au moins une partie de leur oxygène lors de leur passage dans la zone de réaction (R1) ou dans la deuxième zone de réaction (R2);
- les particules de combustible solide imbrûlées (ou particules d'imbrûlés), injectées dans la zone de réaction (R1) et n'ayant pas totalement été gazéifiées ou injectées dans la deuxième zone de réaction (R2) et ayant subi essentiellement une dévolatilisation;
- éventuellement les cendres volantes, résultant de la combustion totale des particules de combustible solide et pour lesquelles le temps de séjour dans les zones de réaction (R1) et (R2) a été suffisant.

A la sortie de la deuxième zone de réaction (R2), les effluents gazeux sont envoyés dans la zone de séparation (S3).

La zone de séparation (S3) permet ainsi de séparer au sein du mélange gazeux issu de la zone de combustion (R2), les particules lourdes des particules légères. Les particules lourdes sont essentiellement constituées par les particules d'oxydes métalliques à recycler et les particules légères de particules d'imbrûlés à recycler vers la zone de réaction (R1) et éventuellement de cendres volantes.

Au sein de la zone de séparation (S3), la vitesse superficielle de l'écoulement gazeux est supérieure à la vitesse terminale de chute des particules de combustible imbrûlées pour permettre leur entraînement avec le gaz.

Ainsi, en soumettant le mélange de particules issu de la deuxième zone de réaction (R2) à un écoulement gazeux de vitesse imposée, il est possible de procéder à une séparation "rapide" entre les particules lourdes et les particules légères.

Par séparation rapide, on entend une séparation s'opérant en moins de 1 minute et préférentiellement en moins de 20 secondes, cette durée correspondant au temps de séjour des particules légères dans la phase diluée du séparateur.

La phase diluée présente généralement un taux de solide généralement inférieur à 5%, voire inférieur à 1% (vol.).

La zone de séparation (ou séparateur) comprend au moins une enceinte avec une conduite d'admission (8) dudit mélange, une conduite d'évacuation (13) située en partie inférieure de l'enceinte et une conduite de sortie (10) située en partie supérieure du dispositif, les paramètres d'admission et d'évacuation/sortie étant choisis pour créer dans l'enceinte une phase dense en partie inférieure et une phase diluée en partie supérieure, et dans lequel ladite conduite d'admission débouche dans la phase diluée.

Ainsi, la séparation est réalisée dans la phase diluée du séparateur de façon à obtenir la meilleure efficacité de séparation possible.

On peut définir l'efficacité de séparation par la formule:
X= quantité de particules d'imbrûlés entraînées avec le gaz / quantité totale de particules d'imbrûlés dans le mélange de particules entrant dans le séparateur.

Grâce à la mise en oeuvre du dispositif selon l'invention, une efficacité de séparation généralement supérieure à 70%, voire supérieure à 80%, peut être obtenue.

De par cette bonne efficacité de séparation, il est possible d'optimiser le taux de captage en $CO_2$ du procédé, celui-ci étant défini par le ratio quantité de $CO_2$ émis au niveau de la zone de combustion /quantité totale de $CO_2$ émis dans la boucle CLC.

Par la mise en oeuvre du procédé selon l'invention, le taux de captage peut être supérieur à 90%.

Par exemple, avec une efficacité de séparation de 80%, il est possible d'atteindre un taux de captage de 90%, tout en ayant un avancement de gazéification dans la zone de réaction (R1) limité.

Ainsi, par exemple, le fait d'obtenir une efficacité de séparation de 80% autorise un avancement des réactions de gazéification dans une plage allant de 50 à 70% dans la zone de réaction (R1) en fonction des recyclages et de la teneur en matières volatiles de la charge.

Par voie de conséquence, il est ainsi possible de limiter le temps de séjour de la charge dans la zone de réaction (R1) et d'avoir une zone de réaction (R1) plus compacte.

De manière préférée, l'écoulement gazeux à vitesse imposée est induit entièrement par l'effluent gazeux contenant les particules provenant de la deuxième zone de réaction (R2) mais il est également possible d'ajuster la vitesse par injection complémentaire d'un gaz provenant d'une source externe, qui peut également contribuer à la fluidisation d'une phase dense accumulant les particules sédimentées.

De préférence, la vitesse superficielle du gaz dans la phase diluée de la zone de séparation est fixée à une valeur généralement comprise entre 30 et 300% de la vitesse terminale de chute moyenne des particules de porteur d'oxygène, de préférence comprise entre 50 et 150%, et encore de préférence comprise entre 75 et 125%.

La vitesse terminale de chute moyenne est obtenue à partir de la formule(*):

$$Vt = \left(\frac{4d_p(\rho_s - \rho_g)g}{3\rho_g C_D}\right)^{1/2}$$

où: $d_p$ est le diamètre moyen des particules

$\rho_s$ est la masse volumique des particules (kg/m³)

$\rho_g$ est la masse volumique du gaz (kg/m³)

$C_D$ le coefficient de traînée

(*): extraite de Fluidization Engineering, Butterworth-Heinemann, Daizo Kunii, Octave Levenspiel, p.80)

Comme déjà décrit plus haut, à la sortie de la zone de séparation (S3), le flux gazeux contenant les particules les plus légères est envoyé vers un ou des cyclones de séparation gaz-solide (S5, S6), En sortie du ou des cyclones, le flux gazeux ne contient plus qu'une teneur en particules généralement comprise entre 100 mg/m³ et 1 g/m³. Des traitements ultérieurs sont envisageables, tels que le dépoussiérage ultime, la condensation de l'eau, la récupération de chaleur, la deSOx, la deNOx,...

En ce qui concerne les particules de porteur d'oxygène soutirées directement dans la partie inférieure de la zone de séparation (S3), celles-ci sont envoyées vers une zone de réaction d'oxydation (R4), composée d'un ou plusieurs lits fluidisés en parallèle ou en série alimentée en air ou en un gaz oxydant tel que l'air ou la vapeur d'eau.

La zone d'oxydation (R4) opère en lit fluidisé à une température généralement comprise entre 700 et 1200°C, de préférence entre 950 et 1100°C, en fonction du débit de circulation des oxydes métalliques entre la zone de combustion et la zone d'oxydation et de la capacité de transfert d'oxygène du matériau.

Une fois les particules de porteur d'oxygène réoxydées, celles-ci sont ensuite renvoyées vers la zone de réaction (R1) par la conduite (3).

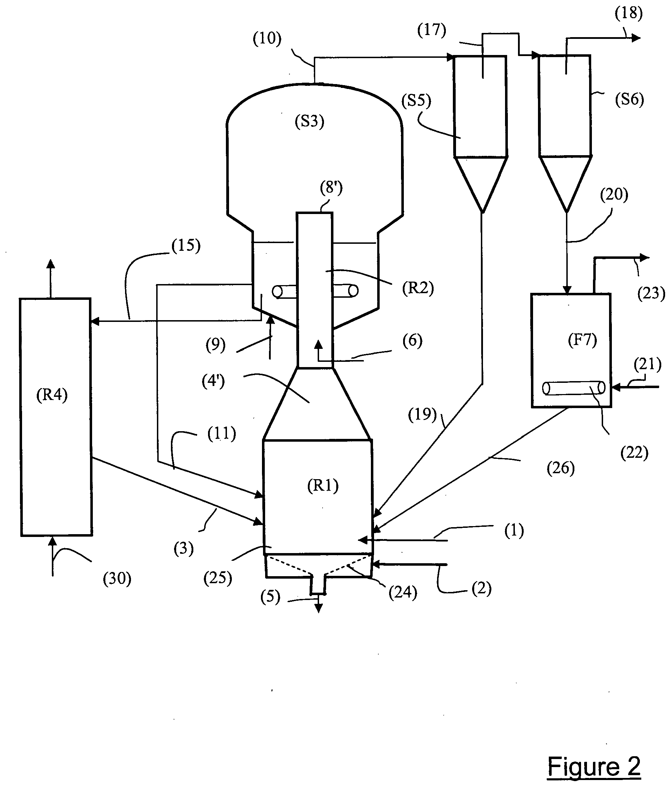

La figure 2 reprend les principaux éléments de la figure 1 en les précisant.

Ainsi, au niveau de la zone de réaction (1), un gaz de fluidisation est introduit par des moyens spécifiques qui sont des plaques perforées (24) disposées en aval d'une boîte à vent (25) alimentée par un conduit (2). Ces plaques sont inclinées d'un angle généralement compris entre 30 et 70° par rapport à l'horizontale et laissent dans la partie centrale un espace libre à l'écoulement des particules, ce qui permet de soutirer à travers le distributeur (25) une partie des particules sédimentant dans cette zone et constituées en majorité de cendres agglomérées.

La section de passage de la zone de réaction (R1) est sensiblement constante et la vitesse superficielle moyenne dans cette zone est généralement comprise entre 0,3 et 3 m/s.

Le taux de vide au sein de la zone de réaction (R1) est inférieur à 0,9 et préférentiellement compris entre 0,5 et 0,8.

Dans la partie supérieure de la zone de réaction (R1), un cône (4') permet d'évacuer les effluents gazeux et les particules entraînées vers la deuxième zone de réaction (R2), constituée d'un réacteur de forme allongée dans lequel les gaz ont une vitesse superficielle plus élevée que dans la première zone de réaction. Dans la deuxième zone de réaction (R2), un flux de particules de porteur d'oxygène provenant d'une zone d'oxydation est introduit par une conduite (6). Selon la figure 2, cette conduite permet une introduction des particules dans la direction axiale de la deuxième zone de réaction. Leur écoulement dans la conduite (6) est de type fluidisé en phase diluée. Le gaz de transport est alors choisi de façon à favoriser la conversion du gaz issu de la zone de réaction (R1) et peut avantageusement contenir de l'oxygène.

En sortie de la deuxième zone de réaction (R2), le gaz contenant des particules est dirigé dans la phase diluée de la zone de séparation (S3) par l'ouverture (8') localisée au sommet de cette deuxième zone de réaction (R2). Dans la phase diluée de la zone de séparation (S3), la vitesse est ralentie du fait de l'augmentation de section de la zone de séparation (S3) pour permettre la sédimentation des particules les plus lourdes dans la partie inférieure de cette zone (S3) et l'entraînement des particules les plus légères dans la partie supérieure de la zone de séparation.

A la sortie de la zone de séparation (S3), une conduite (10) véhicule le flux gazeux contenant les particules les plus légères - majoritairement des particules d'imbrûlés et éventuellement des cendres volantes - et une fraction minoritaire de particules de porteurs d'oxygène vers les deux étages de cyclones de séparation gaz-solide (S5, S6), qui permettent de récupérer la quasi totalité des particules contenues dans le flux gazeux de la conduite (10) et qui sont ensuite recyclées vers la zone de réaction (R1) respectivement par les conduites (19) et (26).

Les particules les plus lourdes au sein de la phase dense fluidisée sédimentent dans l'espace annulaire entre les parois externes de la deuxième zone de réaction (R2) et les parois internes de la zone de séparation (S3). Une partie des particules les plus lourdes est recyclée vers la zone de réaction (R1) par une conduite (11), l'autre partie étant soutirée par une conduite (15) pour être envoyée vers la zone d'oxydation (R4).

A la sortie du second cyclone (S6), les particules entraînées sont extraites par une conduite (18) et les particules non entraînées sont extraites par une conduite (20) et dirigées vers une enceinte (F7) contenant un lit fluidisé permettant une séparation plus poussée des particules légères (cendres) restant parmi les particules d'imbrûlés qui sont ensuite recyclées par une conduite (26) vers la zone de réaction (R1). La fluidisation est assurée par un gaz amené par une conduite (21) et distribué par un distributeur (22), le gaz de fluidisation étant extrait de l'enceinte (F7) avec les particules de cendres volantes par une conduite (23). Le dispositif (F7) peut également être implanté sur la ligne (19) à la sortie de (S5).

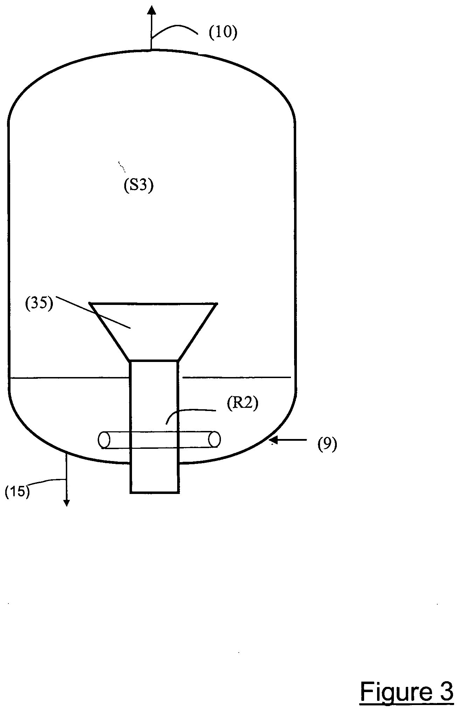

Sur la figure 3, est représenté un type de liaison entre la deuxième zone de réaction (R2) et la zone de séparation (S3) constituée d'un cône divergent (35) selon un angle compris avantageusement entre 6 et 30°. La vitesse minimale du gaz en sortie du cône (35) est supérieure à 3 m/s et de préférence supérieure à 5 m/s, de façon à atteindre des conditions de transport satisfaisantes en sortie de la deuxième zone de réaction (R2).

De cette façon, une bonne répartition du mélange gazeux contenant des particules est assurée sur toute la section transversale de la zone de séparation (S3). Ainsi, la hauteur totale de la zone de séparation (S3) peut être limitée.

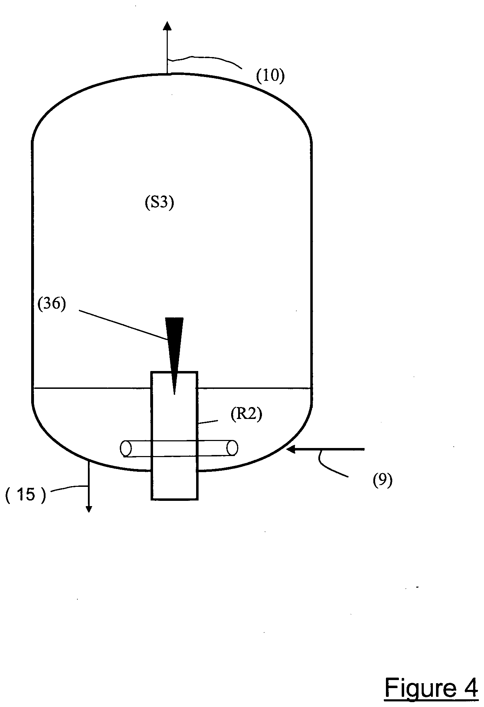

De manière analogue, la figure 4 représente un insert (36) sous forme de cône divergent qui permet de faciliter la répartition du mélange gazeux contenant des particules sur toute la section de la zone de séparation (S3).

## Exemple

Une charge de type charbon est traitée selon le procédé de l'invention tel que décrit sur la figure 1.

On considère une combustion en boucle chimique d'une puissance nominale de 100 MWth mettant en oeuvre des particules de porteur d'oxygène à base de nickel ayant les propriétés suivantes:

- masse volumique: 2725 kg/m$^3$
- capacité de transport réversible: 1,48% en masse

La charge considérée est un charbon moyen ayant les propriétés présentées dans le tableau ci-dessous:

| composition du charbon sec | | |
|---|---|---|
| C | %Pds | 68,7 |
| H | %Pds | 5,45 |
| N | %Pds | 1,65 |
| S | %Pds | 3,75 |
| Ash (cendres) | %Pds | 14,76 |
| O | %Pds | 5,69 |
| total | %Pds | 100 |

| autres données sur charbon | | |
|---|---|---|
| Carbone fixe (%masse sec) | %Pds | 58,3 |
| Humidité (séchage à l'air) | %Pds | 4 |
| capacité calorifique nette (séchage à l'air) | kcal/kg | 6145 |
| capacité calorifique nette (séchage ultime) | kcal/kg | 6335 |
| % matières volatiles | %Pds | 26,1 |

Compte tenu de la puissance demandée et du pouvoir calorifique inférieur du charbon (PCI) de 6 145 kcal/kg, le débit de charge dans la conduite (1) est de 3,89 kg/s.

La circulation de solide porteur d'oxygène (oxydes métalliques) nécessaire à la combustion via la conduite (3) est alors de 575 kg/s pour une quantité d'$O_2$ transférée de 9,47 kg/s.

La température de retour du transporteur d'oxygène après passage dans la zone d'oxydation (R4) est de 1032°C. Il en résulte une température moyenne dans les zones de réaction (R1-R2) et de séparation (S3) de 940°C.

**Réactions dans la partie fluidisée en phase dense de la zone de réaction (R1)**

Le temps de séjour moyen des particules d'oxydes métalliques dans le réacteur est de 380 s. Pour ces conditions opératoires, l'avancement de la réaction de gazéification du charbon par la vapeur est de 69 %.

La réaction de gazéification du charbon est endothermique, l'énergie thermique pour maintenir la réaction à 940 °C est apportée à la fois par le flux de solide oxydé quittant le réacteur air à 1 032 °C (via la conduite (3)) et par la réaction du gaz de synthèse issu de la gazéification du charbon avec le solide porteur d'oxygène.

Pour effectuer la gazéification du charbon, on apporte un flux de 2,7 kg/s de vapeur d'eau à 300°C (par la conduite (2)).

La composition résultante dans la phase gaz est la suivante :

| | | |
|---|---|---|
| H20 | kg/s | 3,620 |
| H2 | kg/s | 0,115 |
| CO | kg/s | 0,999 |
| CO2 | kg/s | 7,845 |
| NO2 | kg/s | 0,141 |
| SO2 | kg/s | 0,194 |

Cet effluent entraîne avec lui (via une conduite (4)) une phase solide composée de 465 kg/s de solide oxydé, de 103 kg/s de solide réduit, de 0,55 kg/s de cendres et de 1,18 kg/s de charbon non converti (en tenant compte du charbon recyclé).

**Réactions dans le réacteur de réduction en phase diluée (R2)**

Le temps de séjour dans ce réacteur est court et fixé à 4 secondes pour les solides, on considère que ce temps n'est pas suffisant pour faire réagir sensiblement le charbon non réagi. En revanche, dans cette zone le solide accompagne la phase gaz et cela permet d'atteindre la composition en phase gaz en sortie de cette zone diluée, qui suit :

| | | |
|---|---|---|
| H20 | kg/s | 4,486 |
| H2 | kg/s | 0,019 |
| CO | kg/s | 0,285 |
| CO2 | kg/s | 8,966 |
| NO2 | kg/s | 0,141 |
| SO2 | kg/s | 0,194 |

Le flux de solide renvoyé vers le réacteur d'oxydation de 566 kg/s.

**Séparation (S3):**

Le séparateur (S3) est dimensionné et opéré de façon à obtenir un écoulement gazeux pour lequel la vitesse est imposée à 1,0 m/s. De cette façon, l'efficacité de séparation obtenue est de 74% (% imbrûlés solides récupérés dans la conduite (10)/quantité de charbon introduite dans le réacteur).

Ainsi, 0,88 kg/s d'imbrûlés sont recyclés pour être réintroduits par les conduites (19) et (20) dans la partie fluidisée dense de la zone de réaction (R1). D'autre part, 0,31 kg/s sont envoyés avec le solide porteur d'oxygène vers la zone d'oxydation (R4) via les conduites (13) et (15).

Le taux de captage de $CO_2$ résultant est de 90,2 %. Un appoint de vapeur par la conduite (9) de 0,79 kg/s est utilisé dans la zone de fluidisation (F4).

**Dimensionnement:**

Sur la base du bilan matière exposé précédemment, on peut déterminer une taille d'unité pour le réacteur de réduction qui fait l'objet de l'invention.

Dans la zone de réaction (R1), le critère dimensionnant est la circulation des gaz dont la vitesse est de 0,75 m/s, le taux de vide du lit fluidisé dense est de 65 %.

Dans la deuxième zone de réaction (R2), le critère dimensionnant est la circulation des gaz dont la vitesse est de 7,5 m/s, le taux de vide du lit fluidisé dilué est de 99 %.

Dans la zone de séparation (S3) l'élément dimensionnant est la circulation des gaz dans la partie supérieure, au dessus de l'embouchure provenant de la deuxième zone de réaction (R2). La vitesse superficielle des gaz y est fixée à 1,0 m/s au dessus de l'embouchure de (R2), et à 0,1 m/s au dessous, i.e. dans la zone de fluidisation (F4). La hauteur de dégagement au dessus du lit est fixée égale au diamètre. La hauteur sous l'embouchure de la deuxième zone de réaction (R2) est de 4 m.

On en déduit la taille des éléments principaux :

|  | R1 | R2 | S3 |
|---|---|---|---|
| hauteur (m) | 8,05 | 17,0 | 11,0 |
| diamètre (m) | 6,77 | 2,45 | 7,03 |

Ces éléments étant superposés les uns au dessus des autres pour une séquence (R1), (R2) puis (S3), la hauteur totale de l'unité est de 35 m environ.

**Bilan thermique**

La boucle de combustion chimique est largement exothermique. La température est fixée à 130 °C, la récupération de chaleur est répartie entre le solide et la récupération de chaleur sur les fumées de la façon suivante :

| Échangeur de chaleur sur solide (F4) | 42,8 MWth |
|---|---|
| Récupération de chaleur sur les fumées | 55,7 MWth |

Au final, une énergie de 90,5 MWth est récupérée après décompte de l'énergie pour la génération de vapeur de fluidisation.

**Revendications**

1. Procédé de combustion d'une charge solide en boucle chimique dans laquelle circule un matériau porteur d'oxygène, ledit procédé comprenant au moins:

    - une mise en contact des particules de charge solide en présence de particules d'oxydes métalliques dans une première zone de réaction (R1) opérant en lit fluidisé dense,
    - une combustion des effluents gazeux issus de la première zone de réaction (R1) en présence de particules d'oxydes métalliques dans une seconde zone de réaction (R2) opérant en lit fluidisé dilué,
    - une séparation des particules d'imbrûlés et des particules d'oxydes métalliques au sein d'un mélange issu de la zone (R2) comprenant du gaz de combustion, des particules d'imbrûlés, et des particules d'oxydes métalliques dans une zone de séparation (S3) recevant par son admission (8) ledit mélange,
    - une réoxydation des particules d'oxydes métalliques dans une zone d'oxydation (R4) avant de les renvoyer vers la zone (R1).

2. Procédé selon la revendication 1, selon lequel l'admission du mélange de particules à séparer dans la zone de séparation (S3) est réalisée dans une phase diluée du lit fluidisé que comprend cette zone.

3. Procédé selon l'une des revendications 1 ou 2, selon lequel la charge solide est choisie parmi le charbon, le coke, le pet-coke, la biomasse, les sables bitumineux et les déchets ménagers.

4. Procédé selon l'une des revendications précédentes, selon lequel le temps de séjour moyen de la phase solide dans la zone de réaction (R1) est compris entre 0,25 et 20 minutes et la vitesse superficielle du gaz comprise entre 0,3 et 3 m/s.

5. Procédé selon l'une des revendications précédentes, selon lequel le temps moyen de séjour du gaz dans la seconde zone (R2) est compris entre 1 et 20 secondes et le temps moyen de séjour des solides entre 2 secondes et 1 minute, et dans lequel le taux de vide dans la zone (R1) est supérieur à 0,9.

6. Procédé selon l'une des revendications précédentes, selon lequel, dans la zone de séparation (S3), un écoulement gazeux de vitesse imposée est induit à au moins 80% par l'effluent gazeux de combustion_contenant les particules provenant de seconde la zone (R2), l'autre partie étant fournie par un gaz provenant d'une source externe.

7. Procédé selon l'une des revendications précédentes, selon lequel, dans la zone de séparation (S3), la vitesse superficielle du gaz dans la phase diluée de la zone de séparation est fixée à une valeur comprise entre 30 et 300% de la vitesse terminale de chute moyenne des particules de porteur d'oxygène.

8. Procédé selon la revendication 7, selon lequel, dans la zone de séparation (S3), la vitesse superficielle du gaz dans la phase diluée de la zone de séparation est fixée à une valeur comprise entre 50 et 150% de la vitesse terminale de chute moyenne des particules de porteur d'oxygène.

9. Procédé selon l'une des revendications précédentes, selon lequel à la sortie de la zone de séparation (S3), le flux gazeux contenant les particules légères et une fraction de particules de porteurs d'oxygène est envoyé vers au moins un étage de séparation gaz-solide (S5, S6) pour récupérer la quasi totalité des particules contenues dans le flux gazeux provenant de la zone de séparation (S3) et qui sont ensuite recyclées vers la première zone de réaction (R1).

10. Procédé selon l'une des revendications précédentes, selon lequel on admet un mélange de particules et de gaz dans l'enceinte de la zone de séparation (S3), on extrait les particules par une sortie en partie haute de l'enceinte et une évacuation en partie basse de cette enceinte, les paramètres d'admission et d'extraction étant choisis pour créer dans l'enceinte une phase dense inférieure et une phase diluée supérieure, phase diluée dans laquelle est admise ledit mélange.

11. Installation configurée pour réaliser la combustion d'une charge solide selon le procédé selon l'une des revendications 1 à 10, ladite installation comprenant au moins:

- une première zone de réaction (R1) comprenant une alimentation en combustible solide (1), en un gaz de fluidisation (2) et en particules de porteur d'oxygène (3),
- une deuxième zone de réaction (R2) recevant par une alimentation (4) les gaz de combustion contenant des particules provenant de la première zone de réaction,
- une zone de séparation (S3) des particules solides recevant par son admission (8) un effluent gazeux de combustion de la deuxième zone et contenant des cendres, des particules de porteur d'oxygène et des particules d'imbrûlés,
- une zone d'oxydation (R4) alimentée en particules de porteur d'oxygène par la zone de séparation (S3) et en air.

12. Installation selon la revendication 11, dans laquelle la seconde zone de réaction (R2), comprend une alimentation (6) de solide porteur d'oxygène frais.

13. Installation selon la revendication 11 ou 12, dans laquelle la seconde zone de réaction comprend une alimentation (7) en oxygène.

14. Installation selon la revendication 11, dans laquelle la zone de séparation (S3) comprend une enceinte avec au moins une conduite d'admission (8) dudit mélange, une conduite d'évacuation (13) située en partie inférieure de l'enceinte et une conduite de sortie (10) située en partie supérieure du dispositif, les paramètres d'admission et d'évacuation/sortie étant choisis pour créer dans l'enceinte une phase dense en partie inférieure et une phase diluée en partie supérieure, et dans lequel ladite conduite d'admission débouche dans la phase diluée.

15. Installation selon la revendication 14, dans lequel l'enceinte du séparateur (S3) comprend en outre une conduite d'alimentation pour un gaz provenant d'une source externe.

16. Installation selon l'une des revendications 11 à 13, dans lequel la section de passage de la seconde zone de réaction (R2) est inférieure à la section de passage de la première zone de réaction (R1).

17. Installation selon l'une des revendications 11 à 16, comprenant en outre au moins un étage de séparation gaz-solide (S5, S6) pour récupérer les particules contenues dans le flux gazeux issus de la zone de séparation (S3) et les recycler par une conduite (19, 20) vers la première zone de réaction (R1).

18. Installation selon la revendication 17, comprenant deux étages de séparation gaz-solide (S5, S6) dans laquelle un (S6) des étages de séparation est alimenté par un flux gazeux contant des particules provenant de l'autre (S5) des étages de séparation.

19. Installation selon la revendication 18, dans laquelle au moins une enceinte contenant un lit fluidisé pour séparer les particules légères restant parmi les particules d'imbrûlés, est présente sur les conduites (19, 20).

**Patentansprüche**

1. Verfahren zur Verbrennung einer Feststoffcharge in einer chemischen Schleife, in der ein Sauerstoff tragendes Material zirkuliert, wobei das Verfahren mindestens umfasst:

   - Inkontaktbringen der Partikel einer Feststoffcharge im Beisein von Metalloxidpartikeln in einer ersten Reaktionszone (R1), die im dichten Wirbelbett arbeitet,
   - Verbrennung der Gasabflüsse aus der ersten Reaktionszone (R1) in Gegenwart von Metalloxidpartikeln in einer zweiten Reaktionszone (R2), die im verdünnten Wirbelbett arbeitet,
   - Trennung der unverbrannten Partikel und der Metalloxidpartikel in einem aus der Zone (R2) kommenden Gemisch, umfassend Verbrennungsgas, unverbrannte Partikel und Metalloxidpartikel, in einer Trennungszone (S3), die durch ihren Einlass (8) das Gemisch aufnimmt,
   - Reoxidation der Metalloxidpartikel in einer Oxidationszone (R4), bevor sie in die Zone (R1) zurückgeschickt werden.

2. Verfahren nach Anspruch 1, bei dem der Einlass des Gemisches von zu trennenden Partikeln in die Trennungszone (S3) in einer verdünnten Phase des Wirbelbetts, das diese Zone umfasst, durchgeführt wird.

3. Verfahren nach einem der Ansprüche 1 oder 2, bei dem die Feststoffladung unter Kohle, Koks, Pet-Coke, Biomasse, Ölsand und Haushaltsabfällen ausgewählt ist.

4. Verfahren nach einem der vorhergehenden Ansprüche, bei dem die durchschnittliche Aufenthaltszeit der festen Phase in der Reaktionszone (R1) zwischen 0,25 und 20 Minuten beträgt, und die Oberflächengeschwindigkeit des Gases zwischen 0,3 und 3 m/s beträgt.

5. Verfahren nach einem der vorhergehenden Ansprüche, bei dem die durchschnittliche Aufenthaltszeit des Gases in der zweiten Zone (R2) zwischen 1 und 20 Sekunden beträgt, und die durchschnittliche Aufenthaltszeit der Feststoffe zwischen 2 Sekunden und 1 Minute beträgt, und bei dem der Leeranteil in der Zone (R1) größer als 0,9 ist.

6. Verfahren nach einem der vorhergehenden Ansprüche, bei dem in der Trennungszone (S3) ein Gasstrom mit vorgegebener Geschwindigkeit zu mindestens 80 % durch den Verbrennungsgasabfluss, der die von der zweiten Zone (R2) kommenden Partikel enthält, induziert wird, wobei der andere Teil durch ein von einer externen Quelle kommendes Gas geliefert wird.

7. Verfahren nach einem der vorhergehenden Ansprüche, bei dem in der Trennungszone (S3) die Oberflächengeschwindigkeit des Gases in der verdünnten Phase der Trennungszone auf einen Wert zwischen 30 und 300 % der durchschnittlichen Endfallgeschwindigkeit der Sauerstoff tragenden Partikel festgesetzt wird.

8. Verfahren nach Anspruch 7, bei dem in der Trennungszone (S3) die Oberflächengeschwindigkeit des Gases in der verdünnten Phase der Trennungszone auf einen Wert zwischen 50 und 150 % der durchschnittlichen Endfallgeschwindigkeit der Sauerstoff tragenden Partikel festgesetzt wird.

9. Verfahren nach einem der vorhergehenden Ansprüche, bei dem am Ausgang der Trennungszone (S3) der Gasstrom, der die leichten Partikel und eine Fraktion von Sauerstoff tragenden Partikeln enthält, zu mindestens einer Gas-Feststoff-Trennungsstufe (S5, S6) geschickt wird, um gleichsam die Gesamtheit der in dem von der Trennungszone (S3) kommenden Gasstrom enthaltenen Partikel wiederzugewinnen, die sodann zu der ersten Reaktionszone (R1) wiederverwertet werden.

10. Verfahren nach einem der vorhergehenden Ansprüche, bei dem ein Gemisch aus Partikeln und Gas in den Raum der Trennungszone (S3) eingelassen wird, die Partikel durch einen Ausgang im oberen Teil des Raums und eine Ableitung im unteren Teil dieses Raums extrahiert werden, wobei die Einlass- und Extraktionsparameter derart gewählt sind, dass in dem Raum eine untere dichte Phase und eine obere verdünnte Phase erzeugt wird, wobei in die verdünnte Phase das Gemisch eingelassen wird.

11. Anlage, die eingerichtet ist, um die Verbrennung einer Feststoffladung nach dem Verfahren nach einem der Ansprüche 1 bis 10 durchzuführen, wobei die Anlage mindestens umfasst:

   - eine erste Reaktionszone (R1), umfassend eine Zufuhr von festem Brennstoff (1), von Fluidisierungsgas (2) und von Sauerstoff tragenden Partikeln (3),
   - eine zweite Reaktionszone (R2), die durch eine Zufuhr (4) die Verbrennungsgase aufnimmt, die von der ersten Reaktionszone kommende Partikel enthalten,
   - eine Trennungszone (S3) der festen Partikel, die über ihren Einlass (8) einen Verbrennungsgasabfluss der zweiten Zone aufnimmt, umfassend Asche, Sauerstoff tragende Partikel und unverbrannte Partikel,
   - eine Oxidationszone (R4), die mit Sauerstoff tragenden Partikeln durch die Trennungszone (S3) und mit Luft versorgt wird.

12. Anlage nach Anspruch 11, bei der die zweite Reaktionszone (R2) eine Zufuhr (6) von frischen Sauerstoff tragendem Feststoff umfasst.

13. Anlage nach Anspruch 11 oder 12, bei der die zweite Reaktionszone eine Sauerstoffzufuhr (7) umfasst.

14. Anlage nach Anspruch 11, bei der die Trennungszone (S3) einen Raum mit mindestens einer Einlassleitung (8) des Gemisches, eine Ableitung (13), die sich im unteren Teil des Raums befindet, und eine Ausgangsleitung (10), die sich im oberen Teil der Vorrichtung befindet, umfasst, wobei die Einlass- und Ableitungs-/Ausgangsparameter derart gewählt sind, dass in dem Raum eine dichte Phase im unteren Teil und eine verdünnte Phase im oberen Teil erzeugt wird, und wobei die Einlassleitung in die verdünnte Phase mündet.

15. Anlage nach Anspruch 14, bei der der Raum des Separators (S3) ferner eine Versorgungsleitung für ein von einer externen Quelle kommendes Gas umfasst.

16. Anlage nach einem der Ansprüche 11 bis 13, bei der der Durchgangsquerschnitt der zweiten Reaktionszone (R2) kleiner als der Durchgangsquerschnitt der ersten Reaktionszone (R1) ist.

17. Anlage nach einem der Ansprüche 11 bis 16, ferner umfassend mindestens eine Gas-Feststoff-Trennungsstufe (S5, S6), um die in dem aus der Trennungszone (S3) kommenden Gasstrom enthaltenen Partikel wiederzugewinnen und durch eine Leitung (19, 20) zu der ersten Reaktionszone (R1) wiederzuverwerten.

18. Anlage nach Anspruch 17, umfassend zwei Gas-Feststoff-Trennungsstufen (S5, S6), wobei eine der Trennungsstufen (S6) mit einem Gasstrom versorgt wird, der Partikel enthält, die von der anderen (S5) der Trennungsstufen kommen.

19. Anlage nach Anspruch 18, bei der mindestens ein Raum, der ein Wirbelbett zur Trennung der leichten Restpartikel unter den unverbrannten Partikeln in den Leitungen (19, 20) vorhanden ist.

## Claims

1. A combustion method for a solid feed using a chemical loop wherein an oxygen-carrying material circulates, said method comprising at least:

   - contacting the solid feed particles in the presence of metallic oxide particles in a first reaction zone (R1) operating in dense fluidized bed mode,
   - carrying out combustion of the gaseous effluents from first reaction zone (R1) in the presence of metallic oxide particles in a second reaction zone (R2) operating in dilute fluidized bed mode,

- separating the unburnt particles and the metallic oxide particles within a mixture coming from second reaction zone (R2) comprising combustion gas, unburnt particles and metallic oxide particles in a separation zone (S3) receiving said mixture through intake (8),
- re-oxidizing the metallic oxide particles in an oxidation zone (R4) prior to sending them back to first zone (R1).

2. A method as claimed in claim 1, wherein the mixture of particles to be separated in separation zone (S3) is supplied in a dilute phase of the fluidized bed of this zone.

3. A method as claimed in any one of claims 1 or 2, wherein the solid feed is selected from among coal, coke, pet coke, biomass, bituminous sands and household waste.

4. A method as claimed in any one of the previous claims, wherein the mean residence time of the solid phase in reaction zone (R1) ranges between 0.25 and 20 minutes, and the superficial gas velocity ranges between 0.3 and 3 m/s.

5. A method as claimed in any one of the previous claims, wherein the mean residence time of the gas in second zone (R2) ranges between 1 and 20 seconds, and the mean residence time of the solids ranges between 2 seconds and 1 minute, the void fraction in zone (R1) being above 0.9.

6. A method as claimed in any one of the previous claims wherein, in separation zone (S3), a gas flow of imposed velocity is induced at least at 80 % by the gaseous combustion effluent containing the particles from second zone (R2), the other part being provided by a gas coming from an external source.

7. A method as claimed in any one of the previous claims wherein, in separation zone (S3), the superficial gas velocity in the dilute phase of the separation zone is set at a value ranging between 30 and 300 % of the mean terminal fall velocity of the oxygen-carrying particles.

8. A method as claimed in claim 7 wherein, in separation zone (S3), the superficial gas velocity in the dilute phase of the separation zone is set at a value ranging between 50 and 150 % of the mean terminal fall velocity of the oxygen-carrying particles.

9. A method as claimed in any one of the previous claims wherein, at the outlet of separation zone (S3), the gas stream containing the light particles and a fraction of oxygen-carrying particles is sent to at least one gas-solid separation stage (S5, S6) so as to recover nearly all of the particles contained in the gas stream coming from separation zone (S3), which are then recycled to first reaction zone (R1).

10. A method as claimed in any one of the previous claims, wherein a mixture of particles and of gas is allowed into the enclosure of separation zone (S3), the particles are extracted through an outlet in the upper part of the enclosure and a discharge line in the lower part of this enclosure, the intake and extraction parameters being so selected as to create in the enclosure a lower dense phase and an upper dilute phase, a dilute phase into which said mixture is allowed.

11. A plant configured for carrying out combustion of a solid feed according to the method as claimed in any one of claims 1 to 10, said plant comprising at least:

- a first reaction zone (R1) comprising a solid feed (1), a fluidization gas (2) and a oxygen-carrying particle (3) feed point,
- a second reaction zone (R2) receiving, through a feed point (4), the combustion gases containing particles from the first reaction zone,
- a solid particle separation zone (S3) receiving, through intake (8), a gaseous combustion effluent from the second zone, containing ashes, oxygen-carrying particles and unburnt particles,
- an oxidation zone (R4) supplied with oxygen-carrying particles by separation zone (S3) and with air.

12. A plant as claimed in claim 11, wherein second reaction zone (R2) comprises a fresh oxygen-carrying solid feed point (6).

13. A plant as claimed in claim 11 or 12, wherein the second reaction zone comprises an oxygen feed point (7).

**14.** A plant as claimed in claim 11, wherein separation zone (S3) comprises an enclosure with at least one delivery line (8) for said mixture, a discharge line (13) arranged in the lower part of the enclosure and an outlet line (10) arranged in the upper part of the device, the intake and discharge/outlet parameters being so selected as to create in the enclosure a dense phase in the lower part and a dilute phase in the upper part, and wherein said delivery line opening into the dilute phase.

**15.** A plant as claimed in claim 14, wherein the enclosure of separator (S3) also comprises a delivery line for a gas coming from an external source.

**16.** A plant as claimed in any one of claims 11 to 13, wherein the section of flow of second reaction zone (R2) is smaller than the section of flow of first reaction zone (R1).

**17.** A plant as claimed in any one of claims 11 to 16, also comprising at least one gas-solid separation stage (S5, S6) for recovering the particles contained in the gas stream from separation zone (S3) and for recycling them through a line (19, 20) to first reaction zone (R1).

**18.** A plant as claimed in claim 17, comprising two gas-solid separation stages (S5, S6) wherein one (S6) of the separation stages is supplied with a gas stream containing particles coming from the other (S5) separation stage.

**19.** A plant as claimed in claim 18, wherein at least one enclosure containing a fluidized bed for separation of the light particles remaining among the unburnt particles is present on lines (19, 20).

Figure 1

Figure 2

(10)

(S3)

(35)

(R2)

(9)

(15)

**Figure 3**

(10)

(S3)

(36)

(R2)

(9)

( 15 )

Figure 4

**EP 2 577 162 B1**

**RÉFÉRENCES CITÉES DANS LA DESCRIPTION**

**Documents brevets cités dans la description**

- FR 2850156
- FR 2936301 A1